Europäisches Patentamt

European Patent Office

Office européen des brevets

(19)

(11) Publication number: **0 263 795**
**A2**

# EUROPEAN PATENT APPLICATION

(12)

(21) Application number: **87830346.0**

(22) Date of filing: **29.09.87**

(51) Int. Cl.⁴: **H 04 N 7/01**

(30) Priority: **10.10.86 IT 4854186**

(43) Date of publication of application:
**13.04.88 Bulletin 88/15**

(84) Designated Contracting States:
**AT BE CH DE ES FR GB GR IT LI LU NL SE**

(71) Applicant: **FONDAZIONE UGO BORDONI**
**Via Baldassarre Castiglione 59**
**I-00142 Roma (IT)**

(72) Inventor: **Miceli, Salvatore**
**Via Foscolo 32**
**I-00185 Roma (IT)**

(74) Representative: **Fiammenghi-Domenighetti, Delfina et al**
**Fiammenghi-Fiammenghi Via Quattro Fontane 31**
**I-00184 Roma (IT)**

(54) **TV system independent of the scanning formats.**

(57) A television system is disclosed which is independent of the scanning formats and is applicable to a high definition television system and fits the facilities offered by the emerging technologies as well as those of the prior art. The information related to the television pictures and supplied by a television pictures source according to the peculiar scanning format thereof are stored into a buffer or transit memory and then transferred on a transmission channel to another buffer or transit memory, from which the receiving apparatus takes the information according to its peculiar scanning format independent of that of the source.

EP 0 263 795 A2

**Description**

TV SYSTEM INDEPENDENT OF THE SCANNING FORMATS

This invention relates to a TV system independent of the scanning formats, wherein the shooting apparatus or a TV picture source, for example a television camera or a video recorder or the like, and the receiving apparatus, for example a monitor or another video recorder or the like, are no longer constrained to have the same scanning standard, because the source supplies a TV picture according to its peculiar operation characteristics, and the information contained in said TV picture is stored in a buffer and transferred on a transmission channel to another buffer from which the receiving apparatus takes it according to its peculiar operation characteristics, which are not necessarily the same as those of the source.

Defining a new TV standard implies that the experiments on that standard will be carried out using the existing technologies. Also the system in its earlier stage will make use of known technologies, for example, CRTs for the display and "SATICON" tubes for the television camera sensors. However, emerging technologies such as CCD (Charge Coupled Device) sensors and flat panel displays will be widely used in the long run.

Thus it seems important that a new TV standard should be not constrained to the today device limitations which are going to disappear in the future.

For example it is known that CRTs suffer from flicker problems. Interlaced scanning systems have been mainly introduced to reduce such problems, while keeping a limited bandwidth, rather than by motion portrayal considerations.

On the other hand flat panel displays, which in some case are basically flickerless, will be introduced in a near future also for high definition TV system. It should be then appreciated that a new TV standard independent of the scanning formats of the apparatus being used is very important.

Present television systems have a tight coupling among signals at the source, at the emitting side and at the display end. In fact signals do not essentially change along its path and all equipment can have the same standard. In particular, that means the information is transferred on a pixel mode and no memory is provided along the path of the signal.

On the other hand, some emerging system, such as MAC (Multiple Analog Components) family, transmit the information by separated blocks (luminance, chrominance, audio a.s.o.) along the whole TV line. In this case information is transferred on a line mode, thus involving use of memories and an additional processing at the receiving end. This technique allows a separated for TV emission, while leaving unchanged source and display characteristics.

Also "MUSE", the broadcasting system experienced by NHK, the Japanese TV Company, for its HDTV (High Definition Television) standard, utilizes a similar technique to transfer the information, thus allowing a separated standard for the emission. However, due to the bandwidth compression method used by MUSE, the required memory and processing is larger than in the MAC system.

The above examples refer to emission systems which have been improved by a block transmission on a line mode. Transferring video information on a frame mode, i.e. a block of one or more frames, may therefore be considered as further step in the same direction. However, the increased complessity of a frame mode based on the transmission of blocks of one or more frames, besides allowing improved emission standards; offers a number of additional features which are useful in defining new TV systems from the outset.

Independence of the scanning formats and separation of the information transport from the main characteristics of the TV system are some of the most important features of the TV system introduced by this invention.

This invention seeks to provide a television system based on the transmission of blocks of one or more frames, which system is independent of the picture scanning formats. In a frame mode video chain based on the transmission of blocks of one or more frames only the time slot allotted for the block of one or more frames is fully specified and there is no need any longer for line synchronization between TV picture source and receiving apparatus. Generally speaking, source captures a picture and sends the related information to a buffer or transit memory according to its peculiar format. The stored information is then transmitted at the end of the generation of the frame block by the source. Transmission channel may be of any type, provided that it has a suitable capacity. At the same time the corresponding receiving apparatus reproduces the previously received block of one or more frames and carries out that by a local scanning system. Therefore, also the receiving apparatus has to be equipped with a buffer or transit memory to store the block of one or more frames.

Further characteristics of a TV system based on the transmission of blocks of one or more frames are as follows:

a) Only the pixel structure of the picture, i.e. the number of active lines and the number of active pixel per line, need to be defined together with the number of frames per second.

b) Flicker problems are confined to the display side and may be locally solved by a suitable scanning format, depending on the characteristics of the particular apparatus (CRT, plasma display, a.s.o.).

c) Frame rate is no longer connected to flicker problems and can be selected in order to fit some other important constraints, such as compatibility with the motion picture, compatibility with existing television system, motion portrayal a.s.o.

d) A progressive scanning system, i.e. a non-interlaced system, may be used at the source regardless of the scanning format of the receiving video apparatus. Also in this case line synchronization and retrace times are local problems and can be solved by a suitable scanning format, depending on the current television camera technology (SATICON, CCD sensors, a.s.o.).

e) Interfaces define the physical and logical ways for transferring the information across video chain. Such definition should not have any implication on the main system parameters and may be studied separately. Different interfaces can be defined for various nodes of the video chain in order to comply with local transmission requirements. For example, while a common interface should be used for studio interconnections, the interfaces of the user would take the functions of the emission standard. Consequently, defining a video standard based on blocks of one or more frames requires only the description of the picture structure and the frame rate. Secondly, the video information transport, either for studio or broadcasting, can be completely described by the transmission interface characteristics and can be separately studied. Finally, defining the scanning formats for particular apparatus may be considered as a matter of equipment design and should not have any influence on the system and interfaces.

By the way it should be appreciated that television systems based on the transmission of blocks of one or more frames can be made according to a layered architecture defined by ISO and CCITT in the framework of OSI (Open System Interconnection).

In particular, the definition of interfaces would deal with the lowest layers, while the transfer of frame blocks and the picture format would rely on fifth and sixth layers, respectively. However, a complete description of the various functions of the television system depending on the layered architecture does not fall within the scope of this invention and then will not be described any longer.

This invention will be hereinafter described in detail according to a preferred non-limitative, non-restrictive embodiment.

In addition to the general concepts set forth above following description will assist the designer or skilled in the art in selecting the main parameters of a television system based on the transmission of blocks of one or more frames.

Reference is firstly made to the technological aspects of new devices which are very likely to be used in the near future (picture isotropy, addressability) and then arguments such as aspect ratio and convertibility which are well known constraints to be softened in order to achieve more flexibility in the system design will be disclosed.

a) Picture isotropy: Regarding the picture shape and structure it should be noted that a "square" pixel format is to be preferred in making CCD (Charge Coupling Device) sensors as well as flat panel displays. This would imply that the isotropic definition of the whole picture might be of interest in the future when such devices are going to be widely used.

b) Addressability: The way CCD sensors and flat panel displays have access to the pixel of the screen is usually X, Y - addressing. Also frame memories and other digital apparatus have the same access to the picture information. Thus, the numbers which are related to a power of 2 should be preferred for the definition of the picture format in order to simplify addressability when using such devices. Furthermore, it should be noted that such new devices can be arranged in square blocks of 256 x 256 pixels, each addressed by 8 x 8 bits in order to provide a modular arrangement. In case no solution by power-of-two numbers is possible, an integer number of such blocks is to be preferred as compromise solution.

c) Aspect ratio: It has been experimentally found that the most acceptable screen format should have an aspect ratio in the range between 1.67:1 and 2:1.

Further studies have proved that a ratio of 1.77:1 (rounded to 16:9) allows the best compromise among the various motion picture formats (see CCIR, Study Group 11: report 801-1 (Mod F), "The present state of High-Definition Television", Document 11/1008 - December 10, 1985). Considering the origin of such figure it seems preferable to state the aspect ratio in a not rigid way, i.e. approximately 1.77:1.

d) Convertibility: A 1:2 ratio between the number of active pixels in a TV line and in the corresponding part of a HDTV line could reduce the conversion process to a trivial subsampling. However, as the HDTV picture is much more difined than a common TV picture it cannot be subsampled without introducing aliasing effects in the converted picture. Moreover, as this consideration applies both the horizontal and vertical axes, a bidimensional filter may be required prior to any conversion process. Therefore, as the simplifications introduced by the trivial subsampling are not really appreciable, it seems preferable for both the horizontal and vertical cases to limit only the related conversion factors to ratios between small integer numbers.

By general agreement the HDTV studio standard should have at least 1000 active lines. Therefore, according to the previous statement on the addressability, it would be better to not go beyond $2^{10}$, i.e. 1024, active lines, if possible. In fact, failing this condition, there would be necessary to provide an additional bit for addressing, thus causing some increase in complexity and cost.

As far as the number of pixel per line is concerned, a solution of 7 blocks of 256 x 256 pixels on the horizontal axis is preferred. Therefore, the whole screen should be formed by 7 x 4 blocks, thus providing 1792 x 1024 pixels. In case of isotropic definition this corresponds also to a screen format of 1.75:1, which is close enough to the nominal value of 1.77:1.

The required memory is then formed of 28 pages of 64 KB each for either the luminance or both chrominance components.

An easy convertibility to the existing systems is required for the HDTV picture. The traditional aspect ratio of 4:3 on the just defined screen takes about 1360 pixels per line which can be converted by a ratio of 17:9 into 720 pixels, as defined by CCIR Rec. 601 for both the existing systems of 625 and 525 lines (see CCIR Study Group 11: Recommendation 601 (Mod F), "Encoding parameters of digital television for studios", Document 11.1041 -December 11, 1985).

Regarding the line conversion process such systems have a number of 575 and 483 active lines, respectively. The 1024 lines of the HDTV screen can therefore be converted by a ratio of 16:9 into 576 lines. The additional lines should be blanked to comply with the specification of the 625-line system.

Regarding the 525-line system, 1026 lines (i.e. 1024 lines of HDTV system plus 2 dummy lines) can be converted by a ratio of 19:9 into 486 lines, thus exceeding by three more lines the system requirements. Suppressing the additional lines would eliminate also the problems, if any introduced by the two dummy lines previously mentioned.

The slightly distortion introduced by both preceding system on the converted picture shape can be considered of little or no importance, thus achieving the full acceptability of the screen specification.

As far as the frame rate is concerned, a value of 25 frames per second could be considered a minimum requirement for the HDTV system. This allows direct compatibility with the 625-line system as well as is an acceptable compromise from the motion picture standpoint (24 pictures per secondo). Greater difficulties may arise from the convertibility to the frame rate of the 525-line system (29,97 Hz) and also from motion portrayal considerations.

The transmission system of blocks of one or more frames can be made compatible with the transmission of only one frame per block in the following way:

Reference is firstly made to an exemplary case of a television system according to this invention which is characterized by the transmission of a block of two frames.

Let assume A and B be the two frames of the block which are supplied separately by the television picture source. Instead of separately transmitting the two frames A and B, the sum of the information of both frames A + B is firstly transmitted and then the difference A - B. In case there is no television picture source able to supply the sequence of frames A and B to be summed and substracted, only one information is present in each block corresponding to the sum A + B of the two frames, the difference A - B of the two frames being zero.

If the apparatus of the receiving side is able to display the sequence of the two frames, the algebraic sum of the received information will be carried out:

(A + B) ± (A - B )

The result of this sum will be divided by two, thus providing the information of the single frame A, in case of a sum, and the single frame B, in case of a difference. If the apparatus of the receiving side is not able to display the sequence of the two frames A and B, the sum A + B as sole frame to be displayed in each block will be used. In any case, both at the transmitting and the receiving sides the full compatibility of the television system with the transmission channel is carried out.

In case of only one frame per block, the net bit rate for the transmission of the components (Y, U, V) resulting from the system parameters is about 734 Mb/s.

As previously mentioned, the ways to transfer this information across the video chain, whether or not in compressed form, whether in digital or analog format, can be described in terms of transmission interface features and can be separately studied.

Although the internal scanning formats for both the television source and the display apparatus are not of the present television system concern, the system being independent thereof, some suggestion for the case of traditional apparatus (for example, CRT) is given herebelow.

Regarding the television camera format, 1080 lines scanned sequentially (1024 being active) may be accepted by the most today sensor devices.

The resulting line frequency is 27 kHz in case of one frame per block, otherwise 54 kHz in case of two frames per block. This allows to comply with Rec. 601, the sampling frequency ratio of components Y, U, V being 16:8:8 and the data rate being 864 Mb/s in case of one frame per block.

As far as the use of a CRT for the display is concerned, a presentation rate of at least 75 Hz should be used because of the residual large area flicker which may be annoying at 50 Hz or less. An economical way to show a picture per block at the rate of 75 Hz is by interlacing 3:1. A suitable number of lines may therefore be 1120 lines of the screen at a line rate of 28 kHz. Local processing could also be applied in order to improve motion portrayal.

## Claims

1. A television system independent of the scanning formats for the transmission of blocks of one or more frames, consisting of a television picture source, a transmission channel and a receiving apparatus displaying the transmitted television pictures, characterized in that between the television picture source and the transmission channel a first buffer or transit memory is provided, to which the source supplies the video information generated according to its peculiar scanning format, and between the transmission channel and the receiving apparatus displaying the transmitted television pictures a second buffer or transit memory is provided, from which the receiving apparatus takes the transmitted video information according to its peculiar scanning format which is independent of the scanning format of the television picture source, the transmission mode and the characteristics of the transmission channel being independent of the scanning formats both of the television picture source and the receiving apparatus.

2. The television system of claim 1, characterized in that the screen is formed of 7 x 4 blocks of 256 x 256 pixels each, thus leading to a total of 1792 x 1024 pixels.

3. The television system of claim 1, characterized in that the format of the screen is 1.75:1.

4. The television system of claim 1, characterized in that the 1360 pixels per line from an aspect ratio of 4:3 are converted into 720 pixels per line with a ratio of 17:9.

5. The television system of claim 1, characterized in that the 1024 lines can be converted by a ratio of 16:9 into 576 lines, the additional line being able to be blanked.

6. The television system of claim 1, characterized in that 1026 lines can be converted by a ratio of 19:9 into 486 lines, the exceeding three lines being able to be blanked.

7. The television system of claim 1, characterized in that the television camera format provides the sequential scanning of 1080.

8. A television system independent of the scanning formats for the transmission of blocks of one or more frames, characterized in that in case of two frames per block first the sum and then the difference of the frames of the block is transmitted, the receiving apparatus carrying out the algebraic sum of the received information and dividing the result by two in order to provide separately the information of the first and the second frames.

9. The television system of claim 8, characterized in that in case of only one frame per block, only the sum of the frames of the block is transmitted and used at the receiving side, the difference of the frames of the block being zero.

10. The television system of claim 9, characterized in that in case of only one frame per block the resulting line frequency of a 1080-line sequentially scanning television camera is 27 kHz.

11. The television system of claim 9, characterized in that in case of only one frame per block, the total number of lines of the receiving apparatus is 1120.

12. The television system of claim 11, characterized in that the line frequency of the receiving apparatus is 28 kHz.